# EUROPEAN PATENT SPECIFICATION

(11) **EP 3 350 038 B1**
(45) Date of publication and mention of the grant of the patent: **27.10.2021**
(21) Application number: 16770242.2
(22) Date of filing: 15.09.2016
(51) Int. Cl.: B60T 8/88, B60T 17/22, F16D 65/08

(54) **DEVICE FOR ANALYZING AND MANAGING DATA GENERATED BY A SENSOR-EQUIPPED BRAKING SYSTEM FOR VEHICLES**
VORRICHTUNG ZUR ANALYSE UND VERWALTUNG VON DATEN, DIE VON EINEM MIT EINEM SENSOR AUSGESTATTETEN BREMSSYSTEM FÜR FAHRZEUGE ERZEUGT WERDEN
DISPOSITIF D'ANALYSE ET DE GESTION DE DONNÉES GÉNÉRÉES PAR UN SYSTÈME DE FREINAGE ÉQUIPÉ DE CAPTEUR POUR VÉHICULES

(30) Priority: 17.09.2015 IT UB20150709
(43) Date of publication of application: 25.07.2018
(73) Proprietor: ITT Italia S.r.l., 20020 Lainate (IT)
(72) Inventor: SERRA, Stefano, 12032 Barge (CN) (IT); DONZELLI, Daniele, 10062 Luserna San Giovanni (Torino) (IT); TERRANOVA, Marco, 10149 Torino (IT); SOLARI, Mattia, 12032 Barge (CN) (IT); MARTINOTTO, Luca, 20025 Legnano (Milano) (IT)
(74) Representative: Rapisardi, Mariacristina
(86) International application number: PCT/EP2016/071859
(87) International publication number: WO 2017/046262

(56) References cited:
- WO-A1-2006/047877
- WO-A1-2014/170726
- US-A1- 2010 211 249

## Description

The present invention relates to a device for analyzing and managing data generated by a sensor-equipped braking system for vehicles.

As is known, vehicle braking devices normally comprise a block of friction material supported by a metallic support element.

Recently, there is the use of one or more piezoceramic sensors interposed between the block of friction material and the metallic support element in order to detect, during the use of the vehicle, the forces that are exchanged exclusively between the block of friction material and the element to be braked, a disk or drum, bound to the wheel.

By means of the detection of these forces it is possible to foresee, in a scientific way, only possible faults and defects within the braking system without there being any interaction, for example, between the braking system and one or more parts of the vehicle and/or the user of the same and/or the manufacturer and/or ancillary services relating to it.

From WO2014/170726A1 a vehicle braking system is known which includes a braking element, in particular a sensorized brake pad. The brake pad has the particularity of integrating at least one piezoceramic sensor operating at high temperatures and capable of emitting an electrical signal when subjected to mechanical stress. The brake pad thus structured is able to detect in a simple and economical way, without the need for an external energy source, the presence and extent of the mechanical stresses which can arise at the interface between said pad and the brake disc. Such a brake pad ultimately allows for the possibility of checking the braking in order to eliminate phenomena such as vibrations and noise and in order to report abnormal operating conditions.

The objective of the present invention is to provide a device for analyzing and managing data generated by a sensor-equipped braking system for vehicles which is able to interact in a single direction or bi-directionally with intrinsic and extrinsic mechanical and non mechanical vehicle data during use.

The objective of the present invention is also is to provide a device for analyzing and managing data generated by a sensor-equipped braking system for vehicles which is capable of guaranteeing an elevated amount of mechanical and non-mechanical intrinsic and extrinsic vehicle data, dependent and independent of its user, with an extremely high degree of precision.

The objective of the invention is also to provide a device for analyzing and managing data generated by a sensor-equipped braking system for vehicles which is capable of partially or completely replacing the action of the user and/or the owner of the vehicle both from a mechanical and a management point of view of said vehicle.

A further objective of the invention is to provide a device for analyzing and managing data generated by a sensor-equipped braking system for vehicles which is capable of simplifying and improving or even partially or totally eliminating mechanical and non-mechanical intrinsic and extrinsic vehicle problems during use whilst at the same time raising the level of road safety at an extremely low cost. These and other objectives are achieved by a device for analyzing and managing data generated by a sensor-equipped braking system for vehicles, according to independent claim 1.

Further characteristics are claimed within the dependent claims and better clarify the technical solution of the present invention whose advantages will become clearer from the description that follows of a non-limiting embodiment given purely by way of example and with reference to the accompanying drawings, in which:

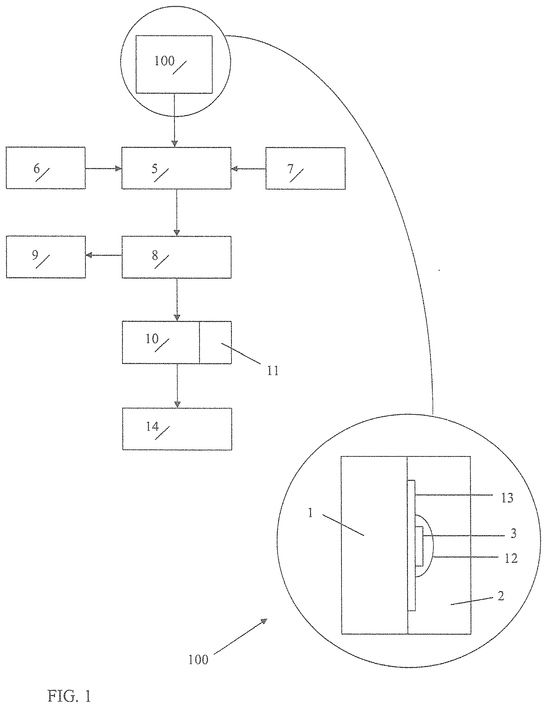

Figure 1 schematically illustrates a block view of the device for analyzing and managing data generated by a sensor-equipped braking system for vehicles according to the invention.

With reference to Figure 1 the device for analyzing and managing data generated by a sensor-equipped braking system for vehicles 100 is illustrated comprising a block of friction material 2, a support element 1 of the block of friction material 2, and sensor means comprising at least one temperature sensor and/or at least one piezoceramic pressure sensor 3 and/or at least one piezoceramic shear force sensor, interposed between the block of friction material 2 and the support element 1.

The device advantageously comprises at least one central control unit 5 capable of receiving in real time from the sensor means at least basic data related to the temperature and pressure generated by the shoes and, therefore, by the block of friction material against the disk or drum of the vehicle when the braking system is activated by the user.

The basic data further comprise data relating to the pressure and temperature reached by the activated braking system and also data inherent to the braking torque.

In addition, the sensor means detect and transmit, together with the basic data, data relating to the residual torque when the braking system is deactivated, i.e. when the user no longer exerts any pressure on the brake pedal.

Not least, the sensor means detect and transmit data regarding the wear on the braking system, and in particular regarding the block of friction material, both during and after the activation thereof.

The central control unit 5 is simultaneously connected to a GPS 6 for sending geo-referenced data and to an accelerometer and/or a speed sensor 7 for receiving early ancillary data in order to simultaneously determine the exact position and the kinematic state of the vehicle.

The central control unit 5 also receives all of the on board data concerning the state of the vehicle acquired directly by the on board systems of the same and, after their analysis and management, transmits said data to at least one recording unit 8 which records said data in real time.

The recording unit 8 is connected on one side to a black box 9 for storing all the data managed by the control unit and on the other side to a long-range communication unit 10.

The black box 9 is removably associated with the vehicle and preferably is a component of the onboard system of the vehicle and is capable of preserving all of the data described above that can thus be used in any context, for example, in the case of an accident.

In particular, the long-range communication unit 10 is preferably a component of the onboard system of the vehicle and comprises at least one Gsm/Gprs/UMTS/HSDPA radio module or M2M modules for the transmission 11 of the data over a telephone network of mobile telephone for the real-time communication of the same in full respect of regulations regarding privacy. Furthermore, that which has been highlighted makes fraud more difficult allowing, for example, for customized insurance rates to be derived, resulting in substantial cost savings.

The communication unit 10 is connected to a service centre 14, which is able to communicate the data at least to the user of the vehicle and/or the automotive fleet management company and/or vehicle insurance company and/or statistics firm and/or traffic management company and/or vehicle maintenance company and/or vehicle production and sales company.

Advantageously each piezoceramic sensor comprises at least one protective element 12 to protect it preferably from high pressures, temperatures and forces acting upon it.

The protective element 12 is preferably made of electrically insulating material with mechanical properties such as to limit the force transmitted to the piezoceramic sensor 3 when an external force of compression is applied to the block of friction material 2.

Furthermore, the protective element 12 is configured to direct said external force of compression at least in part onto an area of the support element surrounding the piezoceramic sensor 3.

Preferably, the temperature sensor also has a similar protective element.

The support element 1 has an electrically insulated electrical circuit 13 having electrical contacts which are connected to electrodes of the piezoceramic sensors for the acquisition of an electrical signal emitted by the same.

The electric circuit 13 is preferably screen printed on the support element 1 and has contacts connected to the electrodes by means of a high temperature solder paste.

Preferably, the temperature sensors provided are also mounted onto the electrically insulated electrical circuit 13 which is integrated in the support element 1, and the electrical circuit 13 also therefore has electrical contacts which are connected to the electrodes of these sensors.

The device thus conceived is subject to variations all of which are within the scope of the invention as defined by the appended claims, and provides numerous and important advantages, amongst which the most evident is that of being capable of supplying immediate assistance in the case of an accident or technical fault as a function of the specific problem.

In the case of an impact, the device of the invention can understand the gravity of the incident, for example by verifying the opening or not of the airbags, and forward a call to an emergency call center using a preset number, transmitting precise information to the operators regarding the location of the accident and any other relevant information that may be useful in calling the emergency services.

The special arrangement and operation of the piezoceramic sensor 3 and the extremely low cost of the entire device of the invention allows the cross-section of users to be increased regarding the use of the black box and allows road safety to be increased on the roads.

The invention thus conceived can be associated with numerous modifications and variations all falling within its scope, as defined by the appended claims.

## Claims

1. A device for analyzing and managing data generated by a sensor-equipped braking system (100) for vehicles, comprising a support element (1) for a block of friction material (2) and a sensor means (3) interposed between the block of friction material (2) and the support element (1), said sensor means comprising at least a temperature sensor, at least one piezoceramic pressure sensor and at least one piezoceramic shear force sensor provided between said block of friction material (2) and said support element (1), further comprising at least a central control unit (5) configured to receive in real time from said sensor means (3) at least basic data related to the pressure of the activated braking system, the temperature of the activated braking system, the braking torque and the residual torque when the braking system is deactivated and the wear on the braking system during and after the activation thereof, said at least a central control unit (5) being connected to a GPS (6) and to an accelerometer (7) so as to receive first auxiliary data on the position and kinematic state of said vehicle, said basic data and said first auxiliary data being analyzed simultaneously with all the onboard data on the state of the vehicle acquired directly from an onboard system of the vehicle, and furhter comprising at least a recording unit (8) connected to said central control unit (5) for the simultaneous real-time recording of said basic data, said first auxiliary data, said onboard data analyzed by said central control unit (5), said recording unit (8) being connected on one side to a black box (9) for storing all said data and on the other side to a long-range communication unit (10).

2. The device for analyzing and managing data generated by a sensor-equipped braking system for vehicles according to the previous claim, wherein said at least one temperature sensor is mounted on an electrically insulated electrical circuit (13) which is integrated in the support element (1).

3. The device for analyzing and managing data generated by a sensor-equipped braking system for vehicles according to the previous claim, wherein the electrically insulated electrical circuit (13) is screen printed on the support element (1).

4. The device for analyzing and managing data generated by a sensor-equipped braking system for vehicles according to claim 1, wherein said long-range communication unit (10) comprises at least a transmission module (11) for transmitting said data via a telephone network of a mobile telephone.

5. The device for analyzing and managing data generated by a sensor-equipped braking system for vehicles according to claim 1 to 4, wherein said black box (9) or said long-range communication unit (10) are components of the onboard system of the veicle.

6. The device for analyzing and managing data generated by a sensor-equipped braking system for vehicles according to any claim 1 to 5, wherein said communication unit (10) is connected to a service centre (14), which is able to communicate said data at least to the user of the vehicle and/or an automobile fleet management company and/or vehicle insurance company and/or statistics firm and/or traffic management company and/or vehicle maintenance company and/or vehicle production and sales company.

7. The device for analyzing and managing data generated by a sensor-equipped braking system for vehicles according to claim 1, wherein it comprises at least one protective element (12) enclosing said at least one piezoceramic sensor (3) so as to protect it preferably from high pressures, temperatures and forces acting upon it, said protective element (12) being preferably made of electrically insulating material with mechanical properties such as to limit the force transmitted to the piezoceramic sensor when an external force of compression is applied on said block of friction material (2).

8. The device for analyzing and managing data generated by a sensor-equipped braking system for vehicles according to claim 7, wherein said protective element (12) is configured to direct said external force of compression at least in part onto an area of the support element (1) surrounding said at least one piezoceramic sensor (3).

9. A vehicle incorporating at least an analysing device according to any preceding claim.

## Patentansprüche

1. Vorrichtung zum Analysieren und Verwalten von Daten, die von einem mit Sensoren ausgestatteten Bremssystem (100) für Fahrzeuge erzeugt werden, umfassend ein Trägerelement (1) für einen Reibmaterialblock (2) und ein Sensormittel (3), das zwischen dem Reibmaterialblock (2) und dem Trägerelement (1) angeordnet ist, wobei das Sensormittel mindestens einen Temperatursensor, mindestens einen piezokeramischen Drucksensor und mindestens einen piezokeramischen Scherkraftsensor umfasst, die zwischen dem Reibmaterialblock (2) und dem Trägerelement (1) vorgesehen sind, ferner umfassend mindestens eine zentrale Steuereinheit (5), die konfiguriert ist, von dem Sensormittel (3) mindestens Basisdaten in Echtzeit zu empfangen, die sich auf den Druck des aktivierten Bremssystems, die Temperatur des aktivierten Bremssystems, das Bremsmoment und das Restmoment, wenn das Bremssystem deaktiviert ist, und den Verschleiß des Bremssystems während und nach dessen Aktivierung beziehen, wobei die mindestens eine zentrale Steuereinheit (5) mit einem GPS (6) und einem Beschleunigungsmesser (7) verbunden ist, sodass sie erste Hilfsdaten bezüglich der Position und des kinematischen Zustands des Fahrzeugs empfängt, und die Basisdaten und die ersten Hilfsdaten gleichzeitig mit allen Borddaten bezüglich des Zustands des Fahrzeugs analysiert werden, die direkt von einem Bordsystem des Fahrzeugs erfasst werden, und ferner umfassend mindestens eine Aufzeichnungseinheit (8), die mit der zentralen Steuereinheit (5) verbunden ist, zur gleichzeitigen Echtzeitaufzeichnung der Basisdaten, der ersten Hilfsdaten und der von der zentralen Steuereinheit (5) analysierten Borddaten, wobei die Aufzeichnungseinheit (8) einerseits mit einer Blackbox (9) zum Speichern aller Daten und andererseits mit einer Fernbereichskommunikationseinheit (10) verbunden ist.

2. Vorrichtung zum Analysieren und Verwalten von Daten, die von einem mit Sensoren ausgestatteten Bremssystem für Fahrzeuge erzeugt werden, nach vorstehendem Anspruch, wobei der mindestens eine Temperatursensor auf einer elektrisch isolierten elektrischen Schaltung (13) angebracht ist, die in dem Trägerelement (1) integriert ist.

3. Vorrichtung zum Analysieren und Verwalten von Daten, die von einem mit Sensoren ausgestatteten Bremssystem für Fahrzeuge erzeugt werden, nach vorstehendem Anspruch, wobei die elektrisch isolierte elektrische Schaltung (13) im auf das Trägerelement (1) siebgedruckt ist.

4. Vorrichtung zum Analysieren und Verwalten von Daten, die von einem mit Sensoren ausgestatteten Bremssystem für Fahrzeuge erzeugt werden, nach Anspruch 1, wobei die Fernbereichskommunikationseinheit (10) mindestens ein Übertragungsmodul (11) zum Übertragen der Daten über ein Telefonnetz eines Mobiltelefons umfasst.

5. Vorrichtung zum Analysieren und Verwalten von Daten, die von einem mit Sensoren ausgestatteten Bremssystem für Fahrzeuge erzeugt werden, nach Anspruch 1 bis 4, wobei die Blackbox (9) oder die Fernbereichskommunikationseinheit (10) Komponenten des Bordsystems des Fahrzeugs sind.

6. Vorrichtung zum Analysieren und Verwalten von Daten, die von einem mit Sensoren ausgestatteten Bremssystem für Fahrzeuge erzeugt werden, nach einem der Ansprüche 1 bis 5, wobei die Kommunikationseinheit (10) mit einem Servicezentrum (14) verbunden ist, das in der Lage ist, die Daten mindestens an den Nutzer des Fahrzeugs und/oder ein Fuhrparkmanagementunternehmen und/oder eine Fahrzeugversicherung und/oder ein Statistikunternehmen und/oder ein Verkehrsmanagementunternehmen und/oder ein Fahrzeugwartungsunternehmen und/oder ein Fahrzeugproduktions- und Vertriebsunternehmen zu übermitteln.

7. Vorrichtung zum Analysieren und Verwalten von Daten, die von einem mit Sensoren ausgestatteten Bremssystem für Fahrzeuge erzeugt werden, nach Anspruch 1, wobei diese mindestens ein Schutzelement (12) umfasst, das den mindestens einen piezokeramischen Sensor (3) umschließt, um ihn bevorzugt vor hohen Drücken, Temperaturen und Kräften, die auf ihn einwirken, zu schützen, wobei das Schutzelement (12) bevorzugt aus elektrisch isolierendem Material mit mechanischen Eigenschaften hergestellt ist, sodass die auf den piezokeramischen Sensor übertragene Kraft begrenzt wird, wenn eine äußere Druckkraft auf den Reibmaterialblock (2) ausgeübt wird.

8. Vorrichtung zum Analysieren und Verwalten von Daten, die von einem mit Sensoren ausgestatteten Bremssystem für Fahrzeuge erzeugt werden, nach Anspruch 7, wobei das Schutzelement (12) konfiguriert ist, die äußere Druckkraft mindestens teilweise auf einen Bereich des Trägerelements (1) zu lenken, der den mindestens einen piezokeramischen Sensor (3) umgibt.

9. Fahrzeug, das mindestens eine Analysevorrichtung nach einem der vorstehenden Ansprüche umfasst.

## Revendications

1. Dispositif pour l'analyse et la gestion de données générées par un système de freinage équipé de capteurs (100) pour véhicules. comprenant un élément de support (1) pour un bloc de matériau de friction (2) et un moyen de capteur (3) interposé entre le bloc de matériau de friction (2) et l'élément de support (1), ledit moyen de capteur comprenant au moins un capteur de température, au moins un capteur de pression piézocéramique et au moins un capteur de force de cisaillement piézocéramique fournis entre ledit bloc de matériau de friction (2) et ledit élément de support (1), comprenant en outre au moins une unité de commande centrale (5) configurée pour recevoir en temps réel à partir dudit moyen de capteur (3) au moins des données de base liées à la pression du système de freinage activé, à la température du système de freinage activé, au couple de freinage et au couple résiduel lorsque le système de freinage est désactivé et à l'usure sur le système de freinage durant et après l'activation de celui-ci, ladite au moins une unité de commande centrale (5) étant connectée à un GPS (6) et à un accéléromètre (7) afin de recevoir des premières données auxiliaires sur la position et l'état cinématique dudit véhicule, lesdites données de base et lesdites premières données auxiliaires étant analysées simultanément avec toutes les données embarquées sur l'état du véhicule acquises directement à partir d'un système embarqué du véhicule, et comprenant en outre au moins une unité d'enregistrement (8) connectée à ladite unité de commande centrale (5) pour l'enregistrement simultané en temps réel desdites données de base, desdites premières données auxiliaires, desdites données embarquées analysées par ladite unité de commande centrale (5), ladite unité d'enregistrement (8) étant connectée d'un côté à une boîte noire (9) pour le stockage de toutes lesdites données et de l'autre côté à une unité de communication à longue portée (10).

2. Dispositif pour l'analyse et la gestion de données générées par un système de freinage équipé de capteurs pour véhicules selon la revendication précédente, dans lequel ledit au moins un capteur de température est monté sur un circuit électrique isolé électriquement (13) qui est intégré dans l'élément de support (1).

3. Dispositif pour l'analyse et la gestion de données générées par un système de freinage équipé de capteurs pour véhicules selon la revendication précédente, dans lequel le circuit électrique isolé électriquement (13) est sérigraphié sur l'élément de support (1).

4. Dispositif pour l'analyse et la gestion de données générées par un système de freinage équipé de capteurs pour véhicules selon la revendication 1, dans lequel ladite unité de communication à longue portée (10) comprend au moins un module de transmission (11) pour la transmission desdites données via un réseau téléphonique d'un téléphone mobile.

5. Dispositif pour l'analyse et la gestion de données générées par un système de freinage équipé de capteurs pour véhicules selon les revendications 1 à 4, dans lequel ladite boîte noire (9) ou ladite unité de communication à longue portée (10) sont des éléments du système embarqué du véhicule.

6. Dispositif pour l'analyse et la gestion de données générées par un système de freinage équipé de capteurs pour véhicules selon l'une quelconque des revendications 1 à 5, dans lequel ladite unité de communication (10) est connectée à un centre de service (14), qui est capable de communiquer lesdites données au moins à l'utilisateur du véhicule et/ou à une société de gestion de flotte automobile et/ou à une société d'assurance de véhicules et/ou à une société de statistiques et/ou à une société de gestion de trafic et/ou à une société d'entretien de véhicules et/ou à une société de production et de ventes de véhicules.

7. Dispositif pour l'analyse et la gestion de données générées par un système de freinage équipé de capteurs pour véhicules selon la revendication 1, dans lequel est compris au moins un élément de protection (12) renfermant ledit au moins un capteur piézocéramique (3) afin de le protéger de préférence de pressions, de températures et de forces élevées agissant sur celui-ci, ledit élément de protection (12) étant de préférence réalisé en un matériau électriquement isolant avec des propriétés mécaniques de sorte à limiter la force transmise au capteur piézocéramique lorsqu'une force de compression externe est appliquée sur ledit bloc de matériau de friction (2).

8. Dispositif pour l'analyse et la gestion de données générées par un système de freinage équipé de capteurs pour véhicules selon la revendication 7, dans lequel ledit élément de protection (12) est configuré pour diriger ladite force de compression externe au moins en partie sur une zone de l'élément de support (1) entourant ledit au moins un capteur piézocéramique (3).

9. Véhicule incorporant au moins un dispositif d'analyse selon l'une quelconque des revendications précédentes.
